# NEUE EUROPÄISCHE PATENTSCHRIFT

(11) **EP 2 318 734 B2**
(45) Veröffentlichungstag und Bekanntmachung des Hinweises auf die Entscheidung über den Einspruch: **24.02.2016**
(45) Hinweis auf die Patenterteilung: 19.09.2012
(21) Anmeldenummer: 09777359.2
(22) Anmeldetag: 22.07.2009
(51) Int. Cl.: F16H 57/02, F16H 57/04

(54) **GETRIEBE**
TRANSMISSION
TRANSMISSION

(30) Priorität: 23.07.2008 DE 102008034414
(43) Veröffentlichungstag der Anmeldung: 11.05.2011
(73) Patentinhaber: SEW-Eurodrive GmbH & Co, 76646 Bruchsal (DE)
(72) Erfinder: SCHWAN, Tobias, 69168 Wiesloch (DE); MEGERLE, Jürgen, 76694 Forst (DE); HÜTTINGER, Alexander, 74245 Neulingen (DE)
(86) Internationale Anmeldenummer: PCT/EP2009/005312
(87) Internationale Veröffentlichungsnummer: WO 2010/009871

(56) Entgegenhaltungen:
- EP-A1- 0 077 291
- DE-A1- 3 617 863
- DE-A1- 10 120 419
- DE-A1- 19 855 970
- DE-A1-102004 036 333
- DE-A1-102006 044 964
- DE-C- 617 253
- US-A- 2 485 537
- US-A- 2 955 001
- US-A- 4 470 324
- US-A- 4 645 213
- Flender Zahnradgetriebe, K20-9 DE/EN/FR 08.02, Stand August 2002 (nur in Auszügen)

## Beschreibung

Die Erfindung betrifft ein Getriebe.

Es ist bekannt, bei Getrieben aus dem Getriebegehäuse herausragende Wellen mittels Wellendichtringen abzudichten.

Aus der US 4 470 324 A ist ein Getriebe bekannt, aus dem eine Getriebewelle herausragt, die mittels einer berührungslosen Dichtung abgedichtet ist, wobei die zum Getriebeinneren hin gerichtete Öffnung oberhalb des sich bei nicht betriebenem Getriebe einstellenden Schmierölstandes angeordnet ist.

Aus der DE 36 17 863 A1 ist als nächstliegender Stand der Technik ein Getriebe mit den Merkmalen des Oberbegriffs des Anspruchs 1 bekannt.

Der Erfindung liegt daher die Aufgabe zugrunde, ein Getriebe weiterzubilden, wobei die Dichtheit gewährleistet sein soll, insbesondere in jeder Einbaulage des Getriebes

Erfindungsgemäß wird die Aufgabe bei dem Getriebe nach den in Anspruch 1 angegebenen Merkmalen gelöst.

Wichtige Merkmale der Erfindung bei dem Getriebe sind, dass das Getriebe mit einer vom Getriebeinneren in die Umgebung herausragenden Welle ausgeführt ist, wobei

die Welle mittels zumindest einer berührungslosen Dichtung abgedichtet ist, wobei die zum Getriebeinneren, also dem das Schmieröl umfassenden Raumbereich des Getriebes, hin gerichtete Öffnung der berührungslosen Dichtung oberhalb des sich bei nicht betriebenem Getriebe einstellenden Schmierölfüllstandes angeordnet ist,

wobei ein Blechstück zwischen der Öffnung und dem zu dieser Öffnung nächstbenachbarten, aus dem Schmierölbad Schmieröl-Wellen und/oder Schmieröl-Schaum erzeugenden Verzahnungsteil angeordnet ist,

wobei die berührungslose Dichtung mittels eines auf die Welle aufgeschobenen Rohrstücks und einem mit einem Getriebegehäuseteil verbundenen Staurohr vorgesehen ist,
wobei das Blechstück (4) am Staurohr (1) befestigt ist.

Von Vorteil ist dabei, dass mit zwei einfach herstellbaren Teilen die berührungslose Dichtung herstellbar ist, und dass ein Schutz der Dichtung vor im Betrieb erzeugten Wellen oder erzeugtem Schaum vorsehbar ist. Das Blechstück ist derart ausformbar, dass die erzeugten Wellen die Höhe der Öffnung der Dichtung übertreffen dürfen. Mittels des vorzugsweise noch höher ausgeführten Blechstücks sind die Welle ablenkbar von der Öffnung und werden dann auf dem durch das Blechstück verlängerten Weg stark abgedämpft. Somit ist ein Eintreten von Schmieröl in die berührungslose Dichtung verhinderbar.

Bei einer vorteilhaften Ausgestaltung ragt die Welle in Gravitationsrichtung nach unten heraus. Von Vorteil ist dabei, dass das Getriebe derart aufstellbar ist, dass die Welle in Gravitationsrichtung nach unten aus dem Getriebegehäuse herausragt und trotzdem Dichtheit gewährleistbar ist.

Bei einer vorteilhaften Ausgestaltung ist die berührungslose Dichtung eine Labyrinth-Dichtung. Von Vorteil ist dabei, dass eine einfach herstellbare Dichtungsart verwendbar ist, die berührungslos, also verschleißfrei, arbeitet und keine aufwendigen Zusatzteile benötigt.

Bei einer vorteilhaften Ausgestaltung weist das Rohrstück eine Tropfkante auf, insbesondere die auf gleichem Radius vorgesehen ist wie eine Absatzkante am Staurohr. Von Vorteil ist dabei, dass einerseits ein Abschleudern von Öltropfen ermöglicht ist und gleichzeitig ein einfaches und klares Ablesen des Abstandes ermöglicht ist.

Bei einer vorteilhaften Ausgestaltung ist das Blechstück schweißverbunden mit dem Staurohr. Von Vorteil ist dabei, dass eine einfach und schnell herstellbare Verbindung verwendbar ist Vorzugsweise ist hierzu ein Loch im Blechstück vorgesehen, an dessen Randbereich die Verschweißung ausgeführt ist.

Bei einer vorteilhaften Ausgestaltung ist das Blechstück im Wesentlichen eben oder gebogen ausgeführt. Von Vorteil ist dabei, dass bei ebener Ausführung das Blechstück einfach erstellbar ist und bei gebogener Ausführung das Blechstück der Form des Zahnrades der vorhergehenden Stufe anpassbar ist, wodurch eine noch bessere Dämpfung der Wellen und des Schaums ermöglicht ist.

Bei einer vorteilhaften Ausgestaltung ist zwischen Welle und Rohrstück eine in einer Ringnut vorgesehene Lamellendichtung vorgesehen. Von Vorteil ist dabei, dass das Dichtsystem noch weiter verbessert ist, indem auch zwischen Welle und Rohrstück eine Dichtung vorgesehen ist.

Bei einer vorteilhaften Ausgestaltung ist eine Einstellvorrichtung zum Einstellen der Lage des Staurohrs vorgesehen. Von Vorteil ist dabei, dass das Staurohr nur eine kurze Auflage im Getriebegehäuse haben darf und trotzdem eine genaue Ausrichtung des Staurohrs ausführbar ist. Vorzugsweise ist die Einstellvorrichtung mittels Stiftschrauben ausgeführt.

Bei einer vorteilhaften Ausgestaltung ist zwischen Staurohr und Getriebegehäuseunterteil und/oder die Welle lagerndem Lager eine Dichtung vorgesehen, insbesondere O-Ring. Von Vorteil ist dabei, dass das Dichtsystem weiter verbessert ist.

Bei einer vorteilhaften Ausgestaltung ist am Getriebegehäuseunterteil ein Deckel aufgesetzt und dicht verbunden, der mindestens eine Wellendichtringaufnahme für Wellendichtringe aufweist, wobei die Wellendichtringe die Welle zum Deckel hin abdichten. Von Vorteil ist dabei, dass zusätzlich noch Wellendichtringe vorsehbar sind.

Bei einer vorteilhaften Ausgestaltung ist am äußeren Bereich der Welle eine Staublippe vorgesehen. Von Vorteil ist dabei, dass

Bei einer vorteilhaften Ausgestaltung ist ein die Welle im Getriebegehäuse lagerndes Lager in einer Fetikammer vorgesehen oder fettgeschmiert. Von Vorteil ist dabei, dass

Bei einer vorteilhaften Ausgestaltung sind ein Zuleitungsrohr für Fett zum Lager hin und ein Ableitungsrohr für Fett vorgesehen. Von Vorteil ist dabei, dass

Bei einer vorteilhaften Ausgestaltung ist das Getriebegehäuse einstückig oder als Unterteil und Oberteil ausgeführt. Von Vorteil ist dabei, dass

Weitere Vorteile ergeben sich aus den Unteransprüchen.

### Bezugszeichenliste

- 1: Staurohr
- 2: Rohrstück
- 3: Labyrinth-Dichtung
- 4: Blechstück
- 5: im Blech vorgesehene Ausnehmung zum Herstellen einer Schweißverbindung
- 6: Abtriebswelle
- 7: Wellendichtring
- 8: Wellendichtring
- 9: abtriebsseitiges Lager der Abtriebswelle
- 10: zweites Lager der Abtriebswelle
- 11: abtreibendes Zahnrad der vorletzten Stufe des Getriebes
- 12: Tropfkante
- 13: Getriebegehäuse
- 14: O-Ring-Dichtung
- 15: Zuleitungsrohr für Fett
- 16: Ableitungsrohr für Fett
- 17: Einstellvorrichtung
- 18: Absatz
- 19: Lamellenring
- 20: Staurohr
- 21: O-Ring-Dichtung
- 22: Getriebegehäuseunterteil
- 23: Lamellenring
- 30: Deckel
- 31: Scheibe, aufgeschraubt auf Deckel 30
- 32: Staublippe

Die Erfindung wird nun anhand von Abbildungen näher erläutert:

In der Figur 1 ist ein abtriebsseitiger Bereich eines erfindungsgemäßen Getriebes in Schnittansicht gezeichnet. In Figur 1a ist ein vergrößerter Ausschnitt dargestellt. Dabei ist das Getriebegehäuse, insbesondere obere und untere Seite aus einem Stück gefertigt.

In Figur 2 ist ein ähnliches Getriebe aus einem zweigeteilten Gehäuse gefertigt.

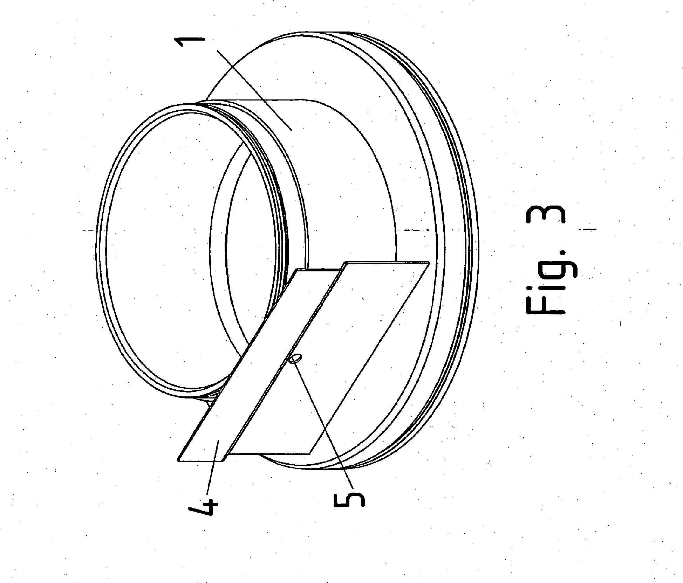

In Figur 3 ist das am Staurohr 1 befestigte Blechstück 4 gezeigt.

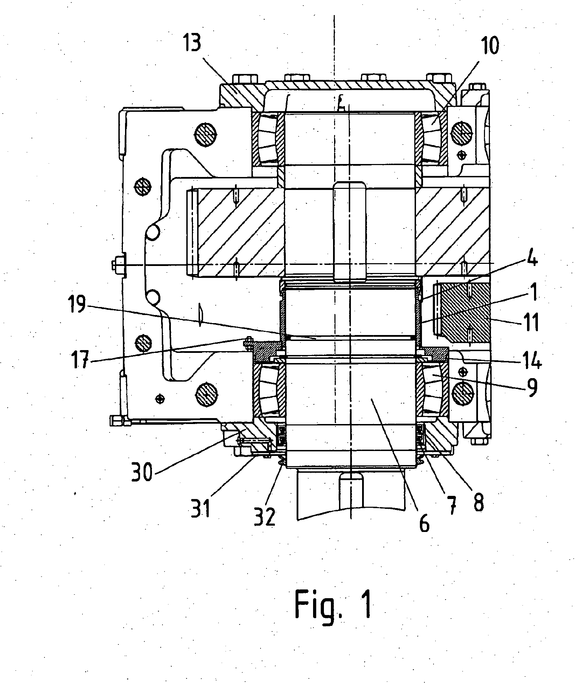

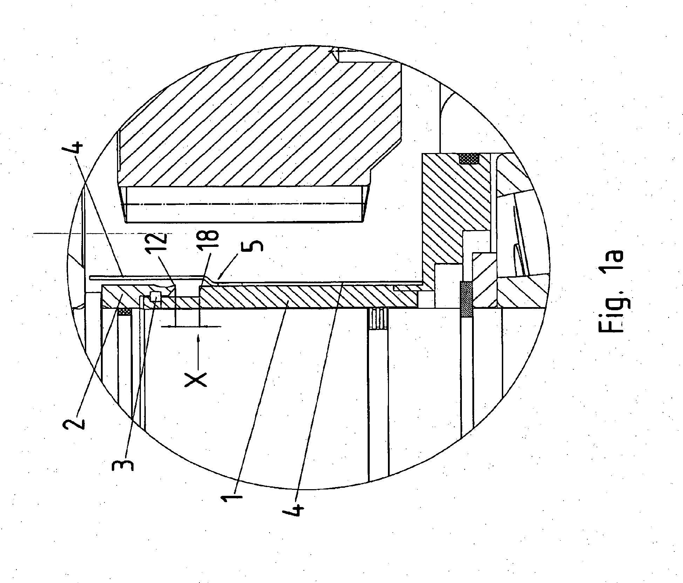

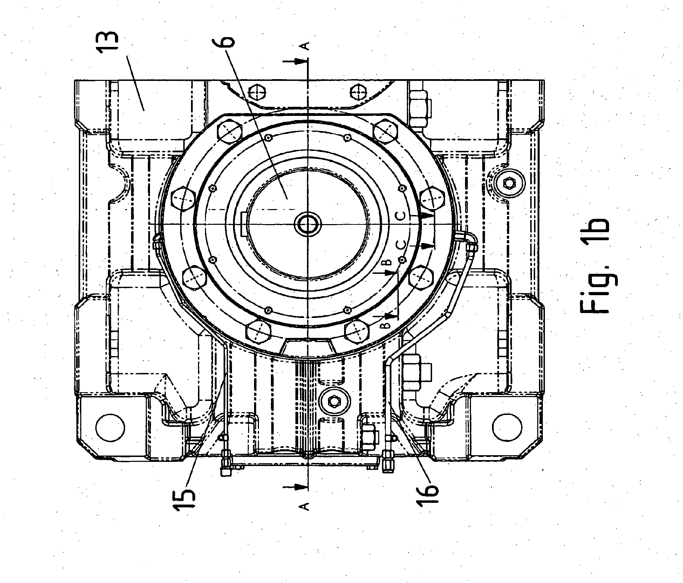

In der Figur 1 ist ein Staurohr 1 gezeigt, das mittels der O-Ring-Dichtung 14 in einer Bohrung des Getriebegehäuses 13 vorgesehen und mit diesem dicht verbunden ist.

Ein Lager 9 der Abtriebswelle 6 ist abtriebsseitig vorgesehen. Dieses Lager 9 ist fettgeschmiert.

Das Staurohr 1 bildet somit zusammen mit dem Getriebegehäuse 13 eine Wanne oder einen schalenförmigen Behälter, in welchen Schmieröl des Getriebes eingefüllt ist und die Verzahnungsteile des Getriebes schmiert.

Zur in den Lagern 9 und 10 gelagerten Abtriebswelle 6 hin ist eine berührungsfreie Dichtung vorgesehen, die vorzugsweise als Labyrinth-Dichtung ausgeführt ist. Hierzu ist auf die Abtriebswelle ein Rohrstück 2 aufgeschoben, das im Dichtungsbereich einen geringen Abstand zum Staurohr 1 hin aufweist. Bei Ausführung der Labyrinth-Dichtung ist dieser Abstandsbereich labyrinthartig ausgeformt. In Figur 1a ist eine einfache Variante gezeigt, bei der die Dichtung zum Getriebeinneren hin und auch nach außen einen schmalen Spalt umfasst, wobei zwischen den beiden Spaltbereichen ein aufgeweiteter Bereich vorgesehen ist.

Zur weiteren Abdichtung der nach unten, also in Gravitationsrichtung aus dem Getriebegehäuse austretenden Abtriebswelle gegen das Getriebegehäuse sind noch zwei weitere hintereinander angeordnete Wellendichtringe 7 und 8 vorgesehen.

Außerdem ist ein Lamellenring 19 zwischen Abtriebswelle 6 und Staurohr 1 zur Abdichtung in einer Ringnut der Abtriebswelle 6 vorgesehen.

Das Rohrstück 2 weist auch zum Getriebeinneren hin eine Tropfkante 12 auf, von der das Schmieröl abschleuderbar ist.

Das Blechstück 4 ist im Wesentlichen eben ausgeführt, wie auch in Figur 1 a und 3 ersichtlich ist.

Die Füllhöhe des Schmierstoffbades ist im Ruhezustand niedriger als die Höhe des Öffnungsbereiches der Dichtung. Vorzugsweise ist ein Sicherheitsabstand eingehalten von beispielsweise 10 bis 100 mm.

Wichtig ist dabei, dass das Blechstück 4 die Eintrittsöffnung, also der vom Getriebeinneren aus vorgesehene Öffnungsbereich, der Dichtung zu benachbart angeordneten drehbaren Verzahnungsteilen zumindest teilweise abtrennt. In der Figur 1 ist hierzu das abtriebsseitig angeordnete Zahnrad der vorletzten Stufe des Getriebes dargestellt. Dieses Zahnrad 11 taucht zumindest teilweise ins Schmierstoffbad ein. Wenn dieses in Drehbewegung versetzt ist, wird das Zahnrad 11 und das mit diesem in Eingriff stehende Verzahnungsteil geschmiert. Außerdem werden im Schmierölbad Wellen oder gar Schaum erzeugt. Die Wellenhöhe und/oder Schaumhöhe können hierbei die Höhe der Eintrittsöffnung der Dichtung übertreffen.

Das Blechstück 4 ist jedoch zwischen dem die Wellen und/oder den Schaum zumindest auch erzeugenden Zahnrad 11 und der Abtriebswelle 6 angeordnet. Dabei leitet das Blechstück die Wellen und den Schaum ab von der Abtriebswelle, so dass der kürzeste Weg mittels des Blechstücks 4 versperrt ist. Vorzugsweise überragt das Blechstück 4 mit seinem oberen Randbereich die maximal auftretende Wellenhöhe und Schaumhöhe. Das untere Ende des Wellenstücks 4 ist unterhalb der im Ruhezustand vorhandenen Schmierölfüllstandshöhe vorgesehen.

Vorzugsweise ist das Blechstück 4 zweifach gebogen, wie in Figur 1 a und 3 deutlich zu sehen, um einen Versatz zwischen einem ersten ebenen Teilbereich des Blechstücks und einem zweiten Teilbereich des Blechstücks zu erzeugen. Auf diese Weise ist die Tropfkante 12 und der Absatz 18 auf dem gleichen Radius vorsehbar. Ein Vorteil dieser Anordnung ist, dass der Abstand von der Tropfkante 12 zum Absatz 18 einfach und klar messbar ist beim Herstellen des Getriebes und somit das Rohrstück 2 relativ zum Staurohr 1 anordenbar ist.

Das Blechstück 4 ist am Staurohr 1 angeschweißt. Hierzu ist eine Ausnehmung 5 im Blechstück 4 vorgesehen, wobei der Randbereich der Ausnehmung 5 schweißverbunden wird mit dem Staurohr 1. Die Schweißverbindung ist im mittleren Bereich des Blechstücks 4 angebracht, so dass dieses sich nicht verbiegt beim Schweißvorgang. Die Ausnehmung 5 ist vorzugsweise als rundes Loch ausgeführt.

In Figur 1b ist eine Draufsicht auf das Getriebe gezeigt, bei der das Zuleitungsrohr 15 für das Zuleiten von Fett in den Bereich des fettgeschmierten Lagers 9 gezeigt ist. Um Überdruck zu Vermeiden ist ein Ableitungsrohr 16 für das Herausleiten von Fett aus diesem Bereich vorgesehen. Dieser Bereich ist sozusagen als Fettkammer ausgebildet und mittels eines am Getriebegehäuse aufgesetzten Deckels 30, der die Wellendichtringsitze für die Wellendichtringe 7 und 8 aufweist, und einer an diesen Deckel 30 angeschraubten, die Wellendichtringe abdeckenden Scheibe 31 abgedichtet. Zusätzlich ist noch außerhalb der Scheibe 31 eine Staublippe 32 zum Schutz gegen grobe Schutzteile vorgesehen.

Mittels der Einstellvorrichtung 17 ist eine Lageeinstellung des Staurohrs 1 ausführbar. Die Einstellvorrichtung 17 ist beispielsweise mittels am Umfang des Staurohrs vorgesehenen Stiftschrauben bewirkbar. Vorteilhaft hat sich erwiesen, wenn am Umfang des Staurohrs drei regelmäßig voneinander beabstandete Stiftschrauben vorgesehen werden.

Der in einer Ringnut der Abtriebswelle vorgesehene Lamellenring 19 stellt die Dichtheit der Verbindung zwischen Abtriebswelle 6 und Staurohr 1 her.

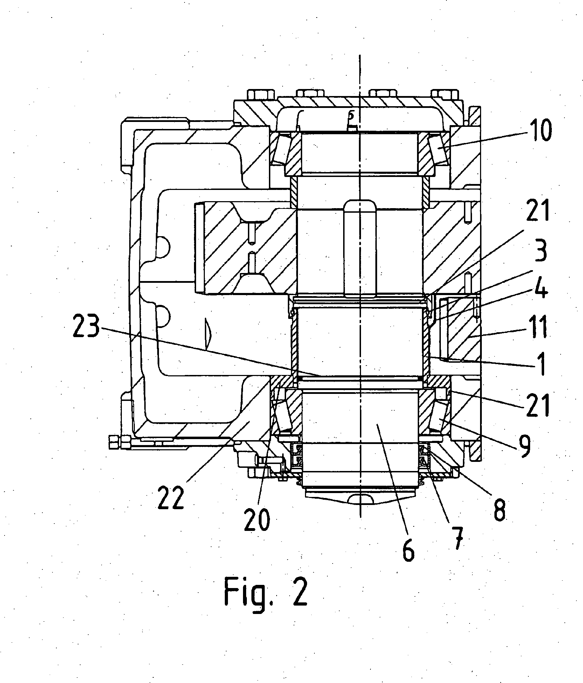

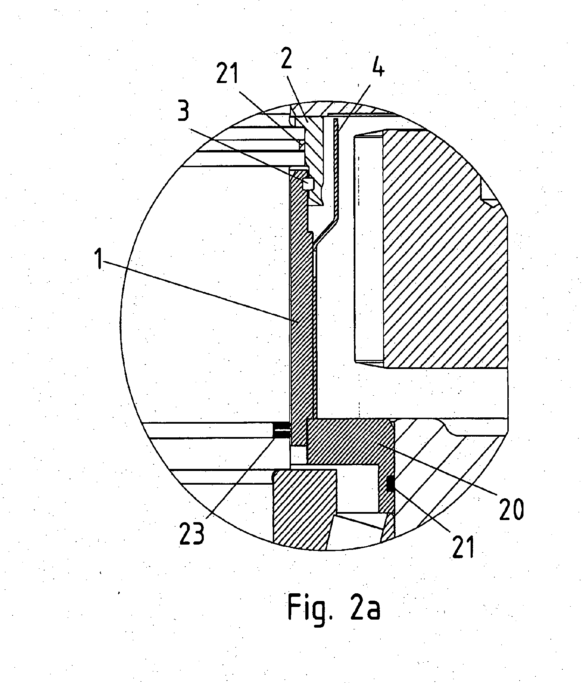

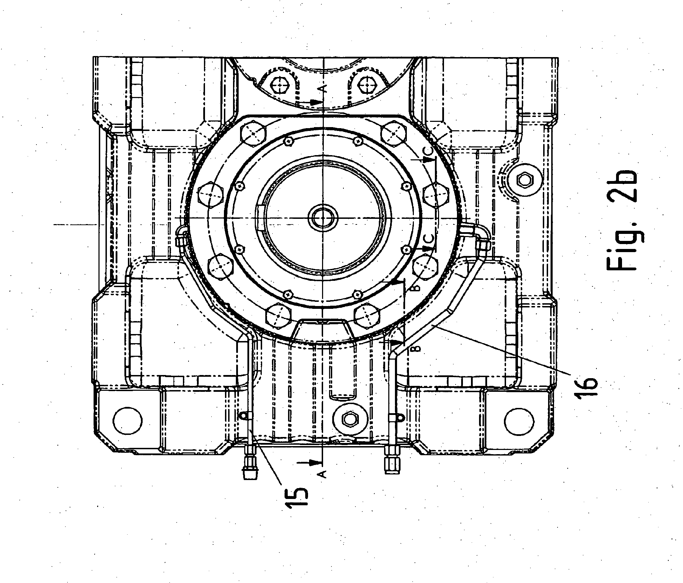

In der Figur 2 ist eine zum Getriebe nach Figur 1 ähnliche Ausführung gezeigt, wobei allerdings das Gehäuse zweigeteilt ausgeführt ist, also aus einem Gehäuseunterteil und einem Gehäuseoberteil zusammengesetzt ist.

Auch ist bei Figur 2 die Verbindung vom Lager 9 zum Staurohr 20 mittels der O-Ring-Dichtung 21 und vom Staurohr 20 zur Abtriebswelle 6 mittels des Lamellenrings 23 abgedichtet.

Da jedoch die Führung des Staurohrs 20 am Getriebegehäuseunterteil 22 axial länger ausführbar ist, ist keine Einstellvorrichtung 17 notwendig.

Das Blechstück 4 passt bei Montage durch die das Lager 9 aufnehmende Bohrung im Getriebegehäuseunterteil 22.

Bei weiteren erfindungsgemäßen Ausführungsbeispielen wird statt der Abtriebswelle eine Zwischenwelle oder die eintreibende Welle mit dem erfindungsgemäßen Dichtsystem, umfassend die Labyrinthdichtung, verwendet. Auch ist das Prinzip auf beliebige aus einem Gehäuse heraustretenden Wellen anwendbar.

Bei weiteren erfindungsgemäßen Ausführungsbeispielen ist das Blechstück anstatt im Wesentlichen eben vorzugsweise gebogen ausgeführt. Somit ist das Blechstück der Form des Zahnrades 11 in etwa nachführbar. Somit schirmt das Blechstück 4 vom Zahnrad 11 her verlaufende Wellen und Schaum besser ab und die Labyrinthdichtung ist noch besser schützbar.

## Patentansprüche

1. Getriebe mit einer vom Getriebeinneren in die Umgebung herausragenden Welle,
**wobei** die Welle mittels zumindest einer berührungslosen Dichtung abgedichtet ist, wobei die zum Getriebeinneren, also dem das Schmieröl umfassenden Raumbereich des Getriebes, hin gerichtete Öffnung der berührungslosen Dichtung oberhalb des sich bei nicht betriebenem Getriebe einstellenden Schmierölfüllstandes angeordnet ist,
**wobei** ein Blechstück (4) zwischen der Öffnung und dem zu dieser Öffnung nächstbenachbarten, aus dem Schmierölbad Schmieröl-Wellen und/oder Schmieröl-Schaum erzeugenden Verzahnungsteil angeordnet ist,
**wobei die berührungslose Dichtung mittels eines auf die Welle aufgeschobenen Rohrstücks (2) und einem mit einem Getriebegehäuseteil verbundenen Staurohr (1) vorgesehen ist,**
**dadurch gekennzeichnet, dass**
**das Blechstück (4) am Staurohr (1) befestigt ist.**

2. Getriebe nach Anspruch 1,
**dadurch gekennzeichnet, dass**
die Welle in Gravitationsrichtung nach unten herausragt.

3. Getriebe nach mindestens einem der vorangegangenen Ansprüche,
**dadurch gekennzeichnet, dass**
die berührungslose Dichtung eine Labyrinth-Dichtung (3) ist

4. Getriebe nach mindestens einem der vorangegangenen Ansprüche,
**dadurch gekennzeichnet, dass**
das Rohrstück (2) eine Tropfkante (12) aufweist, insbesondere die auf gleichem Radius vorgesehen ist wie eine Absatzkante am Staurohr (1).

5. Getriebe nach mindestens einem der vorangegangenen Ansprüche,
**dadurch gekennzeichnet, dass**
das Blechstück (4) schweißverbunden ist mit dem Staurohr (1).

6. Getriebe nach mindestens einem der vorangegangenen Ansprüche,
**dadurch gekennzeichnet, dass**
das Blechstück (4) im Wesentlichen eben oder gebogen ausgeführt ist

7. Getriebe nach mindestens einem der vorangegangenen Ansprüche,
**dadurch gekennzeichnet, dass**
zwischen Welle und Rohrstück (2) eine in einer Ringnut vorgesehene Lamellendichtung vorgesehen ist.

8. Getriebe nach mindestens einem der vorangegangenen Ansprüche,
**dadurch gekennzeichnet, dass**
eine Einstellvorrichtung zum Einstellen der Lage des Staurohrs (1) vorgesehen ist.

9. Getriebe nach mindestens einem der vorangegangenen Ansprüche,
**dadurch gekennzeichnet, dass**
zwischen Staurohr (1) und Getriebegehäuseunterteil (22) und/oder die Welle lagerndem Lager (9) eine Dichtung vorgesehen ist, insbesondere O-Ring.

10. Getriebe nach mindestens einem der vorangegangenen Ansprüche,
**dadurch gekennzeichnet, dass**
am Getriebegehäuseuntertell (22) ein Deckel aufgesetzt und dicht verbunden ist, der mindestens eine Wellendichtringaufnahme für Wellendichtringe (7, 8) aufweist, wobei die Wellendichtringe (7, 8) die Welle zum Deckel hin abdichten.

11. Getriebe nach mindestens einem der vorangegangenen Ansprüche,
**dadurch gekennzeichnet, dass**
am äußeren Bereich der Welle eine Staublippe vorgesehen ist.

12. Getriebe nach mindestens einem der vorangegangenen Ansprüche,
**dadurch gekennzeichnet, dass**
ein die Welle im Getriebegehäuse (13) lagerndes Lager (9) in einer Fettkammer vorgesehen ist oder fettgeschmiert ist.

13. Getriebe nach mindestens einem der vorangegangenen Ansprüche,
**dadurch gekennzeichnet, dass**
ein Zuleitungsrohr für Fett zum Lager (9) hin und ein Ableitungsrohr für Fett vorgesehen sind.

14. Getriebe nach mindestens einem der vorangegangenen Ansprüche,
**dadurch gekennzeichnet, dass**
das Getriebegehäuse (13) einstückig oder als Unterteil und Oberteil ausgeführt ist.

## Claims

1. A transmission having a shaft projecting out into the surrounding area from the interior of the transmission, wherein the shaft is sealed by means of at least one contacfiless seal, wherein the opening, of the contactless seal, directed towards the transmission interior, therefore towards the transmission chamber-region which contains the lubricating oil, is arranged above the lubricating-oil level arising when the transmission is not in operation, wherein a sheet-metal piece (4) is arranged between the opening and the gearing part which is next-adjacent to this opening and which produces lubricating-oil waves and/or lubricating-oil foam from the lubricating-oil bath, wherein the contactless seal is provided by means of a pipe piece (2) pushed onto the shaft and a ram tube (1) connected to a transmission housing part, **characterized in that** the sheet-metal piece (4) is secured to the ram tube (1).

2. A transmission according to claim 1, **characterised in that** the shaft projects out downwards in the gravitational direction.

3. A transmission according to at least one of the preceding claims, **characterised in that** the contactless seal is a labyrinth seal (3).

4. A transmission according to at least one of the preceding claims, **characterised in that** the pipe piece (2) has a drip edge (12), in particular provided on the same radius as an offset edge on the ram tube (1).

5. A transmission according to at least one of the preceding claims, **characterised in that** the sheet-metal part (4) is connected to the ram tube (1) by welding.

6. A transmission according to at least one of the preceding claims, **characterised in that** the sheet-metal part (4) is substantially plane or curved.

7. A transmission according to at least one of the preceding claims, **characterised in that** a lamellar seal provided in an annular groove is provided between the shaft and the pipe piece (2).

8. A transmission according to at least one of the preceding claims, **characterised in that** an adjusting device is provided for adjusting the position of the ram tube (1).

9. A transmission according to at least one of the preceding claims, **characterised in that** a seal, in particular an O-ring, is provided between the ram tube (1) and the transmission housing lower part (22) and/or the bearings (9) supporting the shaft.

10. A transmission according to at least one of the preceding claims, **characterised in that** a cover is placed on the transmission housing lower part (22) and is connected imperviously, which cover has at least one shaft sealing ring receiver for shaft sealing rings (7, 8), wherein the shaft sealing rings (7, 8) seal the shaft towards the cover.

11. A transmission according to at least one of the preceding claims, **characterised in that** a dust lip is provided at the outer region of the shaft.

12. A transmission according to at least one of the preceding claims, **characterised in that** a bearing (9) supporting the shaft in the transmission housing (13) is provided in a grease chamber or is grease-lubricated.

13. A transmission according to at least one of the preceding claims, **characterised in that** a feed pipe for grease towards the bearing (9) and an outlet pipe for grease are provided.

14. A transmission according to at least one of the preceding claims, **characterised in that** the transmission housing (13) is one-piece or is in the form of a lower part and an upper part.

## Revendications

1. Transmission avec un arbre sortant de l'intérieur de la transmission vers l'extérieur,
sachant que l'étanchéité de l'arbre est assurée à l'aide d'au moins un joint d'étanchéité sans contact, sachant que l'ouverture du joint d'étanchéité sans contact qui est dirigée vers l'intérieur de la transmission, donc vers la région spatiale de la transmission contenant l'huile de lubrification, est disposée au-dessus du niveau de remplissage d'huile de lubrification qui s'établit lorsque la transmission n'est pas en service,
sachant qu'une pièce de tôle (4) est disposée entre l'ouverture et l'élément de denture qui est le plus proche de cette ouverture et qui produit, à partir du bain d'huile de lubrification, des vagues d'huile de lubrification et/ou de l'écume d'huile de lubrification,
sachant que le joint d'étanchéité sans contact est prévu au moyen d'une pièce tubulaire (2) enfilée sur l'arbre et d'un tube d'accumulation (1) relié à un élément de carter de transmission, **caractérisée en ce que** la pièce de tôle (4) est fixée sur le tube d'accumulation (1).

2. Transmission selon la revendication 1, **caractérisée en ce que** l'arbre sort vers le bas dans la direction de gravitation.

3. Transmission selon au moins une des revendications précédentes, **caractérisée en ce que** le joint d'étanchéité sans contact est un joint d'étanchéité à labyrinthe (3).

4. Transmission selon au moins une des revendications précédentes, **caractérisée en ce que** la pièce tubulaire (2) présente une arête d'égouttage (12), en particulier qui est prévue sur le même rayon qu'une arête de décrochement sur le tube d'accumulation (1).

5. Transmission selon au moins une des revendications précédentes, **caractérisée en ce que** la pièce de tôle (4) est assemblée par soudage au tube d'accumulation (1).

6. Transmission selon au moins une des revendications précédentes, **caractérisée en ce que** la pièce de tôle (4) est réalisée essentiellement plane ou courbe.

7. Transmission selon au moins une des revendications précédentes, **caractérisée en ce qu'**un joint d'étanchéité à lamelles prévu dans une rainure annulaire est prévu entre l'arbre et la pièce tubulaire (2).

8. Transmission selon au moins une des revendications précédentes, **caractérisée en ce qu'**il est prévu un dispositif de réglage pour régler la position du tube d'accumulation (1).

9. Transmission selon au moins une des revendications précédentes, **caractérisée en ce qu'**un joint d'étanchéité, en particulier un joint torique, est prévu entre le tube d'accumulation (1) et une partie inférieure (22) de carter de transmission et/ou un palier (9) supportant l'arbre.

10. Transmission selon au moins une des revendications précédentes, **caractérisée en ce qu'**un couvercle est placé sur la partie inférieure (22) de carter de transmission et lui est assemblé en étanchéité, couvercle qui présente au moins un logement de bague d'étanchéité d'arbre pour des bagues d'étanchéité d'arbre (7, 8), sachant que les bagues d'étanchéité d'arbre (7, 8) assurent l'étanchéité de l'arbre vis-à-vis du couvercle.

11. Transmission selon au moins une des revendications précédentes, **caractérisée en ce qu'**une lèvre pare-poussières est prévue sur la région extérieure de l'arbre.

12. Transmission selon au moins une des revendications précédentes, **caractérisée en ce qu'**un palier (9) supportant l'arbre dans le carter de transmission (13) est prévu dans une chambre à graisse ou est lubrifié à la graisse.

13. Transmission selon au moins une des revendications précédentes, **caractérisée en ce qu'**il est prévu un tube d'alimentation pour alimenter en graisse le palier (9) et un tube d'évacuation pour la graisse.

14. Transmission selon au moins une des revendications précédentes, **caractérisée en ce que** le carter de transmission (13) est réalisé d'un seul tenant ou sous la forme d'une partie inférieure et d'une partie supérieure.
